# EUROPÄISCHE PATENTSCHRIFT

(11) **EP 3 902 711 B1**
(45) Veröffentlichungstag und Bekanntmachung des Hinweises auf die Patenterteilung: **18.10.2023**
(21) Anmeldenummer: 19828744.3
(22) Anmeldetag: 19.12.2019
(51) Int. Cl.: B60S 1/38

(54) **WISCHBLATTVORRICHTUNG**
WIPER BLADE DEVICE
DISPOSITIF FORMANT BALAI D'ESSUIE-GLACE

(30) Priorität: 27.12.2018 DE 102018251731
(43) Veröffentlichungstag der Anmeldung: 03.11.2021
(73) Patentinhaber: Robert Bosch GmbH, 70442 Stuttgart (DE)
(72) Erfinder: DEPONDT, Helmut, 3370 Boutersem (BE)
(86) Internationale Anmeldenummer: PCT/EP2019/086394
(87) Internationale Veröffentlichungsnummer: WO 2020/136088

(56) Entgegenhaltungen:
- WO-A1-2013/089350
- DE-A1- 10 043 427
- DE-A1-102017 223 755

## Beschreibung

### Stand der Technik

Es ist bereits eine Wischblattvorrichtung mit zumindest einer Wischleisteneinheit, mit zumindest einer Federschiene, welche zumindest eine Fixierausnehmung aufweist, und mit zumindest einem Wischblattadapter, der zumindest zwei Haltelemente aufweist, die in einem montierten Zustand die zumindest eine Federschiene zumindest teilweise umgreifen, und der zu einer unverlierbaren Verbindung mit der zumindest einen Wischleisteneinheit vorgesehen ist, vorgeschlagen worden. WO 2013/089350 A1 und DE 100 43 427 A1 offenbaren eine Wischblattvorrichtung ähnlich dem Oberbegriff von Anspruch 1.

### Offenbarung der Erfindung

Die Erfindung geht aus von einer Wischblattvorrichtung mit zumindest einer Wischleisteneinheit, mit zumindest einer Federschiene, welche zumindest eine Fixierausnehmung aufweist, und mit zumindest einem Wischblattadapter, der zumindest zwei Haltelemente aufweist, die in einem montierten Zustand die zumindest eine Federschiene zumindest teilweise umgreifen, und der zu einer unverlierbaren Verbindung mit der zumindest einen Wischleisteneinheit vorgesehen ist.

Es wird vorgeschlagen, dass der zumindest eine Wischblattadapter zumindest eine Sicherungsrippe aufweist, welche sich zu einer unverlierbaren Verbindung zwischen der Wischleisteneinheit und dem Wischblattadapter in einem montierten Zustand zumindest teilweise durch die Fixierausnehmung der zumindest einen Federschiene erstreckt.

Unter einer "Wischblattvorrichtung" soll in diesem Zusammenhang insbesondere zumindest ein Teil, insbesondere eine Unterbaugruppe, eines Wischblatts, insbesondere eines Scheibenwischblatts und vorteilhaft eines Fahrzeugscheibenwischblatts verstanden werden. Insbesondere kann die Wischblattvorrichtung auch das gesamte Wischblatt, insbesondere das gesamte Scheibenwischblatt und vorteilhaft das gesamte Fahrzeugscheibenwischblatt umfassen. Es ist denkbar, dass die Wischblattvorrichtung dabei zumindest als Teil eines Wischblatts in Flachbalkenbauweise und/oder als Wischblatt in Flachbalkenbauweise ausgebildet ist. Vorzugsweise ist die Wischblattvorrichtung zu einem Einsatz an einem Fahrzeug vorgesehen. Vorzugsweise ist die Wischblattvorrichtung zu einer Reinigung einer Fläche, insbesondere einer Scheibe an einem Fahrzeug vorgesehen. Insbesondere ist die Wischblattvorrichtung zu einer Reinigung einer Fahrzeugscheibe mit einem Fahrzeug, insbesondere einem Wischarm eines Fahrzeugs gekoppelt. Unter "gekoppelt" soll in diesem Zusammenhang insbesondere formschlüssig und/oder kraftschlüssig verbunden verstanden werden. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Wischleisteneinheit" soll insbesondere eine Einheit aus zumindest einem elastischen Material verstanden werden, die dazu vorgesehen ist, zu einer Reinigung einer zu reinigenden Fläche, insbesondere einer Scheibenfläche, vorzugsweise einer Fahrzeugscheibe, in einem Kontakt über die zu reinigende Fläche bewegt zu werden. Vorzugsweise weist die Wischleisteneinheit einen Wischgrundkörper und eine Wischlippe auf. Der Wischgrundkörper ist vorzugsweise fest, insbesondere einstückig, mit der Wischlippe verbunden. Bevorzugt ist die Wischleisteneinheit aus einem natürlichen oder künstlichen Elastomer, insbesondere aus einem Kunststoff und/oder aus Gummi, hergestellt. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren und/oder Extrusionsverfahren, insbesondere Co-Extrusionsverfahren. Bevorzugt ist die Wischleisteneinheit dazu ausgebildet eine Federschiene zu einer Stabilisierung aufzunehmen. Zur Aufnahme der Federschiene bildet die Wischleisteneinheit insbesondere zumindest teilweise und vorzugsweise vollständig eine Federschienenaufnahme aus. Unter einer "Federschienenaufnahme" soll in diesem Zusammenhang insbesondere ein Kanal oder eine Nut verstanden werden, der/die dazu vorgesehen ist, die Federschiene zumindest teilweise aufzunehmen. Vorzugsweise ist die Federschienenaufnahme dazu vorgesehen, die Federschiene zumindest über einen wesentlichen Teil einer Haupterstreckungsrichtung wesentlich zu umgreifen. Insbesondere bildet die Wischleisteneinheit zumindest eine als Federschienenkanal ausgebildete Federschienenaufnahme aus, welcher zu einer vollständigen Aufnahme der zumindest einen Federschiene vorgesehen ist. Alternativ oder zusätzlich bildet die Wischleisteneinheit zwei als seitliche Aufnahmenuten ausgebildete Federschienenaufnahmen aus, welche zu einer teilweisen Aufnahme von jeweils zumindest einer Federschiene vorgesehen sind. Durch die zumindest eine Federschienenaufnahme ist die zumindest eine Wischleisteneinheit mit der zumindest einen Federschiene verbindbar ausgebildet. Die Abmessungen der zumindest einen Federschienenaufnahme sind an die Form und Größe der zumindest einen Federschiene angepasst. Vorteilhaft ist die Wischleisteneinheit formschlüssig, insbesondere kraftschlüssig mit der Federschiene verbunden. Unter einer "Haupterstreckungsrichtung" eines Objektes soll eine Richtung verstanden werden, die parallel zu einer längsten Kantenlänge eines kleinsten Quaders verläuft, welcher das Objekt vollständig umfasst.

Unter einer "Federschiene" soll insbesondere ein makroskopisches Element verstanden werden, das zumindest eine Erstreckung aufweist, die in einem normalen Betriebszustand um zumindest 10 %, insbesondere um wenigstens 20 %, vor-zugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Vorzugsweise ist die Federschiene zumindest teilweise aus einem Federstahl ausgebildet. Alternativ oder zusätzlich ist vorstellbar, dass die Federschiene zumindest teilweise aus einem Kunststoff, aus einem Verbundwerkstoff oder aus einem anderen, einem Fachmann als sinnvoll erscheinenden Material ausgebildet ist. Vorzugsweise weist die Federschiene in einem unbelasteten Zustand im Wesentlichen eine Form eines gebogenen Stabs und besonders vorteilhaft eines abgeflachten gebogenen Stabs auf. Weiterhin vorteilhaft ist die Federschiene einteilig ausgebildet. Alternativ kann die Federschiene auch mehrteilig ausgebildet sein. Besonders vorteilhaft ist eine Krümmung der Federschiene längs der Federschiene in einem unbelasteten Zustand größer als eine Krümmung einer Fahrzeugscheibenoberfläche eines Kraftfahrzeugs, insbesondere einer Fahrzeugscheibe, über welche die Federschiene in wenigstens einem Betriebszustand geführt wird. Unter einem "elastischen Objekt" soll insbesondere ein Objekt verstanden werden, das wiederholt verformbar ist, ohne dass dadurch das Objekt mechanisch beschädigt oder zerstört wird, und das insbesondere nach einer Verformung selbstständig wieder einer Grundform zustrebt. Vorzugsweise umfasst die Wischblattvorrichtung zumindest zwei, insbesondere genau zwei, Federschienen. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden.

Erfindungsgemäß umfasst die zumindest eine Federschiene zumindest eine, bevorzugt genau eine, Fixierausnehmung. Erfindungsgemäß ist die zumindest eine Fixierausnehmung dazu vorgesehen eine unverlierbare Verbindung zwischen der Wischleisteneinheit, der Federschiene und dem Wischblattadapter auszubilden. Vorzugsweise ist die zumindest eine Fixierausnehmung an einer Seite, welche parallel zur Haupterstreckungsrichtung verläuft, in die Federschiene eingebracht. Bevorzugt ist die Fixierausnehmung von einer seitlichen Aussparung gebildet, welche insbesondere zu drei Seiten hin geöffnet ist. Vorzugsweise weist die zumindest eine Fixierausnehmung eine zumindest im Wesentlichen quaderförmige Außenkontur auf. Vorzugsweise weist die zumindest eine Fixierausnehmung zumindest teilweise abgerundete Außenkonturen auf. Alternativ ist denkbar, dass die Außenkonturen der Fixierausnehmung einen beliebigen Winkel, insbesondere 90°, zueinander einschließen. Es ist beispielsweise auch denkbar, dass die Konturen der Fixierausnehmung abgeschrägt, insbesondere mit Winkeln unter 90°, ausgebildet sind.

Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden ist und dazu vorgesehen ist, einen Kopplungsbereich des Wischblattbauteils für eine Kopplung und/oder Kontaktierung mit einem Bauteil, insbesondere Wischarmadapter, an einer zu reinigenden Fläche, insbesondere Fahrzeugscheibe, auszubilden. Durch den Wischblattadapter und den Wischarmadapter ist die Wischblattvorrichtung vorzugsweise mit einem Fahrzeug, insbesondere einem Wischarm eines Fahrzeugs verbunden ausgebildet. Erfindungsgemäß umfasst der Wischblattadapter zumindest eine, insbesondere genau eine, Sicherungsrippe. Die Sicherungsrippe ist vorzugsweise dazu vorgesehen den Wischblattadapter axial an der Wischblattvorrichtung, insbesondere der Wischleisteneinheit, zu sichern. Vorzugsweise schränkt die Sicherungsrippe die Bewegungsfreiheit des Wischblattadapters, insbesondere relativ zu der Federschiene, in zumindest einer Stellung, insbesondere auf ein Minimum, in zumindest einer Raumrichtung vorzugsweise entlang der Hauptersteckungsrichtung der zumindest einen Federschiene ein. Erfindungsgemäß ist der Wischblattadapter im montierten Zustand unverlierbar mit der Wischleisteneinheit und die Wischleisteneinheit mit der Federschiene durch die zumindest eine Sicherungsrippe verbunden. Die zumindest eine Sicherungsrippe weist eine im Wesentlichen quaderförmige Außenkontur auf. Vorzugsweise weist die zumindest eine Sicherungsrippe zumindest teilweise abgerundete Außenkonturen auf. Die zumindest eine Sicherungsrippe des Wischblattadapters ist vorzugsweise dazu vorgesehen in einer Stellung in der einen Fixierausnehmung der zumindest einen Federschiene angeordnet zu sein. Vorzugsweise erstreckt sich die Sicherungsrippe in der zumindest einen Stellung senkrecht zu der Haupterstreckungsrichtung der Federschiene durch die Fixierausnehmung hindurch. Die Sicherungsrippe ist in der Stellung insbesondere parallel zu der Haupterstreckungsrichtung der Federschiene in beide Richtungen zumindest teilweise materiell durch die Federschiene begrenzt. Vorteilhaft wird dadurch eine axiale Sicherung des Wischblattadapters an der Wischblattvorrichtung, insbesondere der Wischleisteneinheit und/oder der Federschiene, erreicht. Der Wischblattadapter, insbesondere ein Bereich in einer Umgebung der zumindest einen Sicherungsrippe, ist dazu vorgesehen zu einer Montage aus ihrer Ruheposition, insbesondere elastisch, ausgelenkt zu werden.

Erfindungsgemäß umfasst der Wischblattadapter zumindest zwei, bevorzugt zumindest vier, insbesondere genau vier, Haltelemente. Erfindungsgemäß ist jedes der zumindest zwei Halteelemente dazu vorgesehen, in einem montierten Zustand die Federschiene zumindest teilweise zu umgreifen. Vorzugsweise ist jedes der zumindest zwei Halteelemente an einer der zwei Seitenwände des zumindest einen Wischblattadapters angeordnet. Bevorzugt weist jedes der zumindest zwei Halteelemente zumindest eine abgerundete Kante auf. Denkbar ist auch, dass jedes der zumindest drei Halteelemente zumindest eine abgeschrägte Kante aufweist. Alternativ ist denkbar, dass jedes der zumindest drei Halteelemente zumindest eine Kante aufweist, die einen 90° Winkel ausbildet. Vorzugsweise ist jedes der zumindest drei Halteelemente als nach innen gerichteter Vorsprung an dem zumindest einen Wischblattadapters, insbesondere einer in Wischrichtung gelegenen Seitenwand des Wischblattadapters, ausgebildet. Unter einer "Wischrichtung" soll eine Richtung verstanden werden, welche bei vollständiger Auflage der Wischlippe auf einer Fläche senkrecht zur Haupterstreckungsrichtung der Wischlippe und senkrecht zu einer Flächennormalen der Auflagefläche ist. Vorzugsweise ist jedes der zumindest drei Halteelemente einstückig, insbesondere einteilig, mit dem zumindest einen Wischblattadapter ausgebildet.

Die zumindest zwei Haltelemente sind in Form und Größe zumindest im Wesentlichen identisch ausgebildet. Unter "im Wesentlichen identisch" soll vorzugsweise verstanden werden, dass zwei Objekte bis auf Fertigungs-, Herstellungs- und/oder Montagetoleranzen identisch ausgebildet sind. Die zumindest zwei Haltelemente bilden vorzugsweise in zumindest einer Stellung einen Formschluss der Wischleisteneinheit. Vorzugsweise ist jedes der zumindest zwei Haltelemente an einer der zwei Seitenwände des zumindest einen Wischblattadapters angeordnet. Die zumindest zwei Haltelemente bilden in Richtung eines geometrischen Mittelpunktes im Innern des Wischblattadapters jeweils zumindest eine Nut zur Aufnahme der zumindest einen Federschiene aus. Die zumindest zwei Haltelemente weisen nach innen gewandte Außenflächen auf, welche jeweils zumindest teilweise zumindest eine Nut zu einer Aufnahme der zumindest einen Federschiene begrenzen. Die von den Haltelementen ausgebildeten Begrenzungen der zumindest einen Nut, weisen jeweils einen rechteckigen Querschnitt entlang einer Ebene auf, welche sich parallel zur Haupterstreckungsrichtung des Wischblattadapters und parallel zu einer Wischrichtung erstreckt. Die von den Haltelementen ausgebildeten Begrenzungen der zumindest einen Nut weisen jeweils einen rechteckigen Querschnitt entlang einer Ebene senkrecht zu einer Wischrichtung auf. Die Nut ist an jedem Haltelement in einem montierten Zustand an einem der Wischlippe zugewandten Bereich der Haltelemente angeordnet. Die zumindest eine Federschiene ist in einem montierten Zustand in den Nuten der Haltelemente angeordnet. Die zumindest eine Federschiene liegt an den Außenflächen der Haltelemente, welche die Nut begrenzen, in einem montierten Zustand an. Zumindest zwei, insbesondere vier, Nuten sind jeweils in einer Flucht zueinander angeordnet. Die zumindest eine Sicherungsrippe erstreckt sich zumindest teilweise in einen Bereich der Nut. Die Nuten, welche von den Haltelementen begrenzt werden, liegen vorzugsweise in einer Ebene, welche parallel zur Hauptersteckungsrichtung und parallel zu einer Wischrichtung angeordnet ist. Die zumindest eine Sicherungsrippe erstreckt sich zumindest teilweise in die Ebene, welche von den zumindest zwei Haltelemente zur Bildung einer Nut ausgespart wird.

Durch die erfindungsgemäße Ausgestaltung der Wischblattvorrichtung kann eine vorteilhaft stabile Verbindung des Wischblattadapters mit der Federschiene erreicht werden. Durch die erfindungsgemäße Ausgestaltung der Wischblattvorrichtung kann der Wischblattadapter vorteilhaft schnell und verliersicher mit der Wischleisteneinheit und der Federschiene verbunden werden. Es kann durch die erfindungsgemäße Ausgestaltung der Wischblattvorrichtung eine vorteilhaft einfache Montage der Wischblattvorrichtung erreicht werden.

Erfindungsgemäß weist die Federschiene eine, insbesondere neben der Fixierausnehmung angeordnete, Verbindungsausnehmung auf, welche dazu vorgesehen ist in einer Verbindungsstellung die zumindest eine Sicherungsrippe des Wischblattadapters aufzunehmen. Erfindungsgemäß umfasst die zumindest eine Federschiene eine Verbindungsausnehmung. Erfindungsgemäß ist die Verbindungsausnehmung an der Kante auf derselben Seite der Federschiene angeordnet wie die zumindest eine Fixierausnehmung. Vorzugsweise ist die zumindest eine Verbindungsausnehmung größer als die zumindest eine Fixierausnehmung der Federschiene ausgebildet. Vorzugsweise ist das durch die zumindest eine Verbindungsausnehmung fehlende Volumen der Federschiene größer als das durch die zumindest eine Fixierausnehmung fehlende Volumen der Federschiene. Bevorzugt ist die Verbindungsausnehmung von einer seitlichen Aussparung gebildet, welche insbesondere zu drei Seiten hin geöffnet ist. Vorteilhaft kann eine unkomplizierte und/oder intuitive Überführung der Wischblattvorrichtung in die Verbindungsstellung ermöglicht werden. Alternativ ist denkbar, dass die die zumindest eine Verbindungsausnehmung gleichgroß oder kleiner als die zumindest eine Fixierausnehmung der Federschiene ausgebildet ist. Vorzugsweise sind die Außenkonturen der zumindest einen Verbindungsausnehmung abgerundet und/oder abgeschrägt ausgebildet. Alternativ und/oder zusätzlich ist denkbar, dass die Außenkonturen zumindest teilweise als Kanten zwischen Außenflächen, welche in einem 90° Winkel zueinander angeordnet sind, ausgebildet sind. Vorzugsweise sind die begrenzenden Außenflächen der zumindest einen Verbindungsausnehmung unstrukturiert, insbesondere glatt, ausgebildet. Alternativ und/oder zusätzlich ist denkbar, dass zumindest eine Außenfläche zumindest teilweise strukturiert, insbesondere speziell geformt und/oder beschichtet, ausgebildet sind. Erfindungsgemäß ist die Verbindungsausnehmung dazu vorgesehen zumindest in einer Verbindungsstellung die zumindest eine Sicherungsrippe des Wischblattadapters aufzunehmen. Vorzugsweise ist die Form und Größe der Verbindungsausnehmung zumindest im Wesentlichen an die Form und Größe der Sicherungsrippe des Wischblattadapters angepasst. Vorzugsweise sind die äußeren Konturen der Verbindungsausnehmung im Wesentlichen quaderförmig ausgebildet. Es ist ebenfalls denkbar, dass die äußeren Konturen der Verbindungsausnehmung im Wesentlichen würfelförmig oder zylinderförmig ausgebildet sind. Dadurch kann insbesondere eine zusätzliche Ausnehmung bereitgestellt werden, aus welcher die Sicherungsrippe heraus in die Fixierausnehmung und damit in eine Fixierstellung überführt werden kann.

Ferner wird vorgeschlagen, dass die Verbindungsausnehmung auf einer der Fixierausnehmung zugewandten Seite zumindest eine Auslenkfläche aufweist, welche dazu vorgesehen ist die Sicherungsrippe, bei einer Bewegung der Sicherungsrippe aus der Verbindungsausnehmung in der Verbindungsstellung in die Fixstellung, senkrecht zu einer Haupterstreckungsrichtung der Wischleisteneinheit auszulenken. Vorzugsweise ist die Auslenkfläche dazu vorgesehen die Sicherungsrippe, bei einer Bewegung, insbesondere senkrecht zu einer Haupterstreckungsrichtung der Federschiene, des Wischblattadapters relativ zu der Federschiene, der Sicherungsrippe senkrecht zu einer Haupterstreckungsrichtung der Wischleisteneinheit auszulenken, wobei die Sicherungsrippe aus der Verbindungsausnehmung in die Fixierausnehmung überführt wird. Die zumindest eine, insbesondere genau eine, Auslenkfläche ist vorzugsweise an einer äußeren Begrenzungsfläche der zumindest einen Verbindungsausnehmung angeordnet. Die zumindest eine Auslenkfläche ist vorzugsweise als eine an die zumindest eine Verbindungsausnehmung angrenzende äußere Seitenfläche der Verbindungsausnehmung der zumindest einen Federschiene ausgebildet. Vorzugsweise ist die Auslenkfläche an einer Seite der Federschiene entlang der Haupterstreckungsachse der Federschiene ausgebildet. Vorzugsweise ist die zumindest eine Auslenkfläche als eine äußere Seitenfläche der Federschiene ausgebildet. Vorzugsweise ist die Auslenkfläche auf derselben Seite wie die Verbindungsausnehmung an der Federschiene angeordnet. Vorzugsweise bildet die zumindest eine Auslenkfläche mit einer Richtung parallel zur Haupterstreckungsrichtung der Federschiene einen spitzen Winkel aus. Vorzugsweise bildet die zumindest eine Auslenkfläche mit einer Richtung parallel zur Haupterstreckungsrichtung der Federschiene einen spitzeren Winkel aus als mit einer Richtung senkrecht zur Haupterstreckungsrichtung der Federschiene. Dadurch kann insbesondere eine Bewegung der Wischblattvorrichtung aus einer Verbindungsstellung, in welcher die Sicherungsrippe in der Verbindungsausnehmung angeordnet ist, in eine Fixstellung, in welcher die Sicherungsrippe in der Fixierausnehmung der Federschiene angeordnet ist, erleichtert werden. Alternativ ist denkbar, dass die zumindest eine Auslenkfläche mit der äußeren Seitenfläche auf der Seite, an welcher die Verbindungsausnehmung angeordnet ist, einen weniger spitzen Winkel ausbildet als mit einer Richtung senkrecht zur Haupterstreckungsrichtung der Federschiene. Vorzugsweise ist die Verbindungsausnehmung ohne die zumindest eine Auslenkfläche im Wesentlichen quaderförmig ausgebildet. Die Auslenkfläche ist vorzugsweise in einem Bereich zwischen den Mittelpunkten der Fixierausnehmung und der Verbindungsausnehmung angeordnet. Vorzugsweise ist die zumindest eine Auslenkfläche als glatte und/oder unstrukturierte Fläche ausgebildet. Vorzugsweise ist die zumindest eine Auslenkfläche als unbeschichtete Fläche ausgebildet. Alternativ ist denkbar, dass die zumindest eine Auslenkfläche als strukturierte, insbesondere beschichtete, Fläche ausgebildet ist.

Ferner wird vorgeschlagen, dass die Verbindungsausnehmung und die Fixierausnehmung der Federschiene in einem Abstand von 5-7 mm voneinander angeordnet sind. Unter "in einem Abstand von 5-7 mm" soll in diesem Zusammenhang verstanden werden, dass die Mittelpunkte, insbesondere die geometrischen Mittelpunkte, der Fixierausnehmung und der Verbindungsausnehmung, insbesondere ohne die Auslenkfläche, einen Abstand entlang der Haupterstreckungsrichtung der Federschiene von 5-7 mm aufweisen. Vorteilhaft kann eine Bewegung der Wischblattvorrichtung aus einer Verbindungsstellung, in welcher die Sicherungsrippe in der Verbindungsausnehmung angeordnet ist, in eine Fixstellung, in welcher die Sicherungsrippe in der Fixierausnehmung der Federschiene angeordnet ist, auf eine geringe geradlinige Bewegung reduziert werden. Dadurch kann vorteilhaft eine Auslenkungsdauer des Wischblattadapters reduziert werden. Alternativ ist denkbar, dass die Verbindungsausnehmung und die Fixierausnehmung der Federschiene in einem Abstand von weniger als 5 mm voneinander angeordnet sind. Alternativ ist ebenfalls denkbar, dass die Verbindungsausnehmung und die Fixierausnehmung der Federschiene in einem Abstand von mehr als 7 mm voneinander angeordnet sind.

Ferner wird vorgeschlagen, dass die zumindest eine Wischleisteneinheit zumindest zwei Leistenausnehmungen aufweist, welche dazu vorgesehen sind in einer Verbindungsstellung die zumindest zwei Haltelemente des Wischblattadapters wenigstens teilweise aufzunehmen. Vorzugsweise weist die zumindest eine Wischleisteneinheit zumindest vier, insbesondere genau vier, Leistenausnehmungen auf. Vorzugsweise sind die zumindest zwei Leistenausnehmung auf gegenüberliegenden Seiten entlang der Hauptersteckungsrichtung der Wischleisteneinheit in einem mittigen Bereich an der Wischleisteneinheit angeordnet. Vorzugsweise sind die zumindest zwei Leistenausnehmung entlang der Hauptersteckungsrichtung an die Größe der zumindest zwei Haltelemente angepasst. Unter "entlang einer Richtung an die Größe angepasst" soll verstanden werden, dass ein Element zumindest in dieser Richtung eine zumindest gleichgroße Ausdehnung aufweist wie das Bezugselement. Die zumindest zwei Leistenausnehmungen weisen zumindest im Wesentlichen quaderförmige Außenkonturen auf. Die Konturen der zumindest zwei Leistenausnehmungen sind vorzugsweise abgerundet und/oder abgeschrägt ausgebildet. Unter einem "mittigen Bereich" soll vorzugsweise ein Bereich verstanden werden, der sich in einer Umgebung des geometrischen Mittelpunkts eines Objektes, insbesondere der zumindest einen Federschiene befindet. Vorzugsweise schließt der mittige Bereich eines Objektes einen Bereich des Objektes ein, der sich ausgehend von dem geometrischen Mittelpunkt des Objektes über, maximal 30 %, besonders bevorzugt maximal 15 % und ganz besonders bevorzugt maximal 10 %, der Haupterstreckung des Objektes entlang des Objektes erstreckt. Dadurch kann insbesondere ein vorteilhaft einfaches Einbringen der Halteelemente in die Wischleisteneinheit erreicht werden. Es kann insbesondere ein einfaches Aufsetzen des Wischblattadapters senkrecht zu einer Haupterstreckungsrichtung der Wischblattvorrichtung erreicht werden.

Ferner wird vorgeschlagen, dass die zumindest eine Wischleisteneinheit zumindest eine Verbindungsausnehmung aufweist, welche dazu vorgesehen ist in zumindest einer Stellung die zumindest eine Sicherungsrippe des Wischblattadapters mindestens teilweise aufzunehmen. Vorzugsweise weist die zumindest eine Wischleisteneinheit genau eine Verbindungsausnehmung auf. Vorzugsweise ist die zumindest eine Verbindungsausnehmung auf einer Seite entlang der Hauptersteckungsrichtung der Wischleisteneinheit mittig zwischen zwei Leistenausnehmungen an der Wischleisteneinheit angeordnet. Vorzugsweise ist die zumindest eine Verbindungsausnehmung entlang der Hauptersteckungsrichtung an die Größe der zumindest einen Sicherungsrippe angepasst. Die zumindest eine Verbindungsausnehmung weist eine zumindest im Wesentlichen quaderförmige Außenkontur auf. Vorteilhaft kann dadurch ein Aufsetzen des Wischblattadapters intuitiv gestaltet werden.

Ferner wird vorgeschlagen, dass die Federschiene zumindest zwei Schienenausnehmungen aufweist, welche dazu vorgesehen sind die zumindest zwei Haltelemente des Wischblattadapters während einer Montage zumindest temporär aufzunehmen. Vorzugsweise weist die Federschiene zumindest vier, insbesondere genau vier, Schienenausnehmungen auf. Vorzugsweise sind die zumindest zwei Schienenausnehmungen auf gegenüberliegenden Seiten entlang der Hauptersteckungsrichtung der Federschiene an der Federschiene angeordnet. Vorzugsweise sind die zumindest zwei Schienenausnehmungen entlang der Hauptersteckungsrichtung an die Größe der zumindest zwei Haltelemente des Wischblattadapters angepasst. Die zumindest zwei Schienenausnehmungen weisen zumindest im Wesentlichen quaderförmige Außenkonturen auf. Die zumindest zwei Schienenausnehmungen sind vorzugsweise in einem mittigen Bereich der zumindest einen Federschiene angeordnet.

Ferner wird vorgeschlagen, dass die zumindest zwei Leistenausnehmungen der Wischleisteneinheit in der Verbindungsstellung dazu vorgesehen sind, jeweils in einer Flucht mit den zumindest zwei Schienenausnehmungen der Federschiene angeordnet zu sein. Dadurch kann der Wischblattadapter vorteilhaft präzise auf die Wischleiste aufgesetzt werden. Vorteilhaft wird erreicht, dass die Wischleisteneinheit und der Wischblattadapter unkompliziert in die Verbindungsstellung gebracht werden können.

Ferner wird vorgeschlagen, dass die zumindest eine Federschiene dazu vorgesehen ist, zu einer unverlierbaren Verbindung des zumindest einen Wischblattadapters und der zumindest einen Wischleisteneinheit aus der Verbindungsstellung in die Fixstellung bewegt zu werden. Vorzugsweise ist die zumindest eine Federschiene dazu vorgesehen, zu einer unverlierbaren Verbindung des zumindest einen Wischblattadapters und der zumindest einen Wischleisteneinheit aus der Verbindungsstellung, insbesondere senkrecht zu einer Haupterstreckungsrichtung der Federschiene, relativ zu der Wischleisteneinheit und des Wischblattadapters in die Fixstellung verschoben zu werden. Vorteilhaft wird die Montage der Wischblattvorrichtung auf zwei wesentliche Schritte reduziert. Vorteilhaft können die Bauteile der Wischblattvorrichtung vorteilhaft einfach und schnell in eine Verbindungsstellung gebracht und durch ein minimales Verschieben, insbesondere um maximal 10 mm bis minimal 1 mm, bevorzugt um maximal 8 mm bis minimal 3 mm, besonders bevorzugt um maximal 7 bis minimal 5 mm, der Federschiene in eine Fixstellung gebracht werden. Dadurch kann eine vorteilhaft kraftsparende Montage des Wischblattadapters erreicht werden.

Ferner wird vorgeschlagen, dass die Leistenausnehmungen und die Schienenausnehmungen einen im Wesentlichen gleich großen Querschnitt aufweisen. Vorteilhaft wird erreicht, dass die Wischleisteneinheit und der Wischblattadapter vorteilhaft einfach in die Verbindungsstellung gebracht werden können. Vorzugsweise weisen die Leistenausnehmungen und die Schienenausnehmungen einen im Wesentlichen gleich großen Querschnitt entlang einer Ebene, welche die Federschiene parallel zur Haupterstreckungsachse mit maximaler Schnittfläche schneidet, aufweisen.

Die erfindungsgemäße Wischblattvorrichtung soll hierbei nicht auf die oben beschriebene Anwendung und Ausführungsform beschränkt sein. Insbesondere kann die erfindungsgemäße Wischblattvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischblattvorrichtung in einer schematischen Explosionsdarstellung,
- Fig. 2: einen Teilausschnitt der erfindungsgemäßen Wischblattvorrichtung mit einer Wischleisteneinheit, mit einer Federschiene und mit einem Wischblattadapter in einer schematischen Unteransicht in einer Fixierstellung,
- Fig. 3: einen Teilausschnitt der erfindungsgemäßen Wischblattvorrichtung mit einer Federschiene, mit einem Wischblattadapter und mit einer ausgeblendeten Wischleisteneinheit in einer schematischen Unteransicht in einer Verbindungsstellung und
- Fig. 4: einen Teilausschnitt der erfindungsgemäßen Wischblattvorrichtung mit einer Federschiene, mit einem Wischblattadapter und mit einer ausgeblendeten Wischleisteneinheit in einer schematischen Unteransicht in einer Fixierstellung.

### Beschreibung des Ausführungsbeispiels

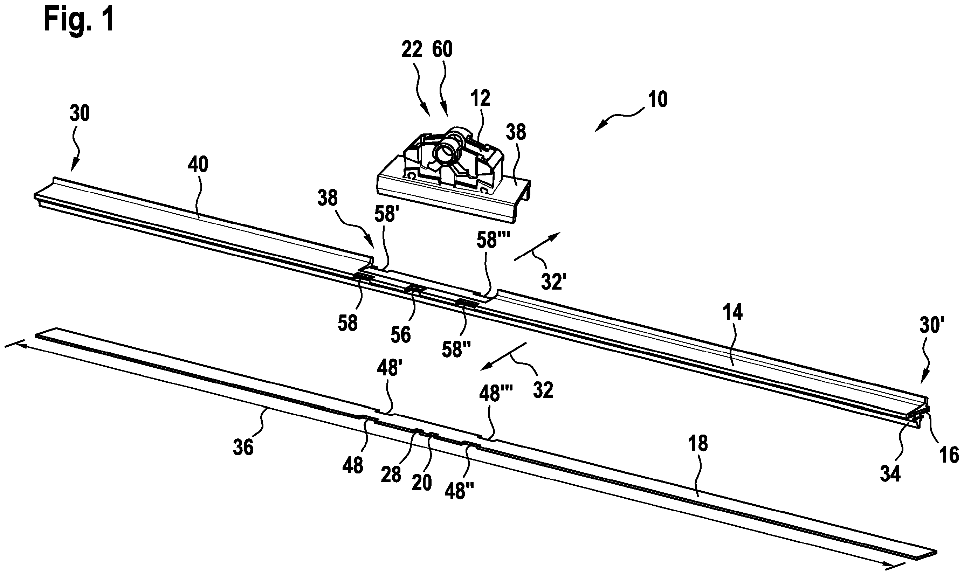

Eine Wischblattvorrichtung 10 ist in einem montierten Zustand in Fig. 1 dargestellt. Die Wischblattvorrichtung 10 weist einen Wischblattadapter 12 auf. Die Wischblattvorrichtung 10 weist eine Federschiene 18 auf. Die Wischblattvorrichtung 10 weist eine Wischleisteneinheit 14 auf. Die Wischleisteneinheit 14, weist eine Wischlippe 34, einen Wischgrundkörper und ein Windabweiserelement 40 auf. Die Wischleisteneinheit 14 ist einstückig ausgebildet. Die Wischleisteneinheit 14 weist eine Federschienenaufnahme 16 auf. Die Federschienenaufnahme 16 ist von einem Federschienenkanal gebildet. Die Federschienenaufnahme 16 erstreckt sich über eine Haupterstreckung 36 der Wischleisteneinheit 14. Die Wischblattvorrichtung 10 weist eine maximale Haupterstreckungslänge auf, welche sich von einem Endbereich 30 der Wischleisteneinheit 14 zu einem weiteren Endbereich 30' über einen mittigen Bereich 22 der Wischleisteneinheit 14 erstreckt. Der Wischblattadapter 12 ist zu einer unverlierbaren Verbindung mit der Wischleisteneinheit 14 vorgesehen. Der Wischblattadapter 12 ist in einem montierten Zustand in einem mittigen Bereich 22 der Wischleisteneinheit 14 angeordnet. Die Wischlippe 34, der Wischgrundkörper und das Windabweiserelement 40 sind vorzugsweise aus demselben Material, insbesondere Gummimaterial, ausgebildet.

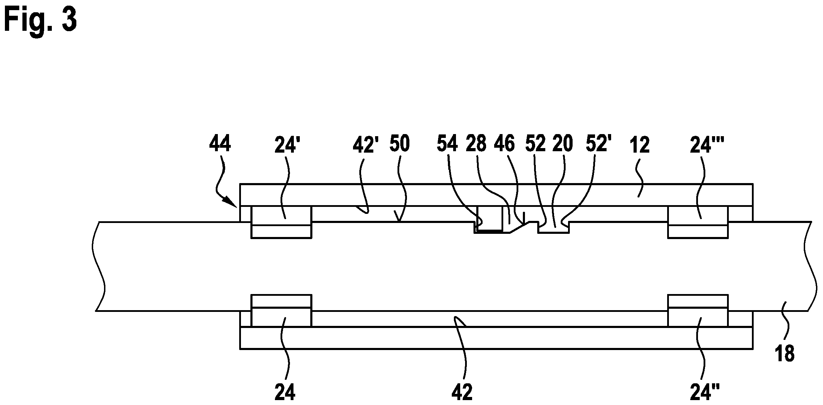

Der Wischblattadapter 12 ist zu einer Kopplung der Wischblattvorrichtung 10 mit einem Wischarm vorgesehen. Der Wischblattadapter 12 umfasst einen Grundkörper 38. Der Grundkörper 38 weist eine U-Profil-Form auf. Grundsätzlich wäre jedoch auch eine andere, einem Fachmann als sinnvoll erscheinende Form denkbar. Ferner weist der Wischblattadapter 12 einen an dem Grundkörper 38 angeordneten Kopplungsbereich 60 auf. Der Kopplungsbereich 60 ist auf einer Oberseite des Grundkörpers 38 angeordnet. Des Weiteren umfasst der Wischblattadapter 12 vier, insbesondere gleiche, Haltelemente 24, 24', 24", 24'". Der Wischblattadapter 12 weist eine Sicherungsrippe 26 auf (Fig. 3). Die Haltelemente 24, 24', 24", 24‴ greifen im montierten Zustand um die Federschiene 18 und liegen an einer der Wischlippe 34 zugewandten Seite und an einer in Wischrichtung 32 32' gelegenen Seite an der Federschiene 18 an. Zumindest zwei der vier Haltelemente 24, 24', 24", 24‴ sind gegenüberliegend jeweils an einer Innenwand 42, 42' des Grundkörpers 38 des Wischblattadapters 12 angeordnet. Die Haltelemente 24, 24', 24", 24‴ begrenzen jeweils eine Nut 44 zur Aufnahme der Federschiene 18. Die Sicherungsrippe 26 ist zwischen zwei der Haltelemente 24', 24‴ an einer Innenwand 42' des Grundkörpers 38 des Wischblattadapters 12 angeordnet. Die Sicherungsrippe 26 ist zumindest teilweise in einer die Nuten 44 umfassenden Ebene angeordnet.

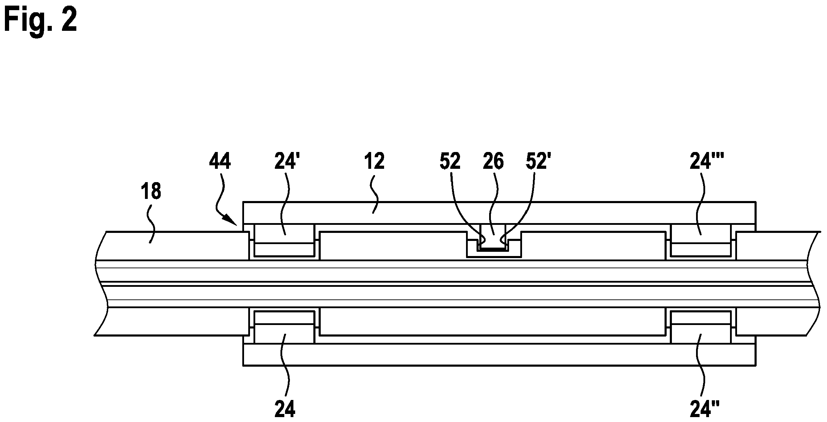

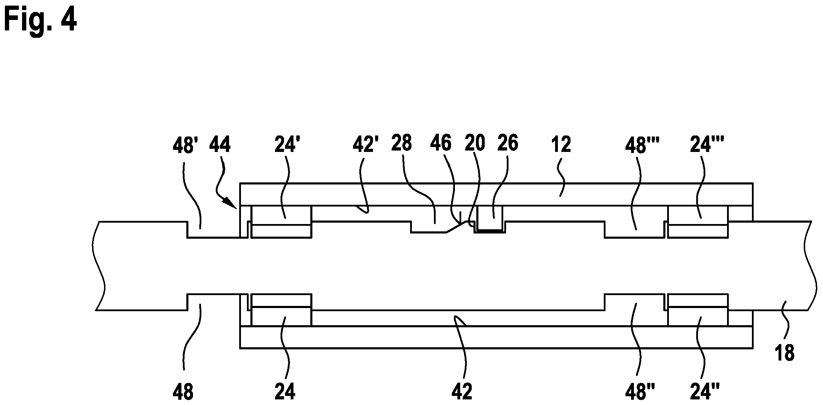

Die Federschiene 18 weist eine Fixierausnehmung 20 auf. Die Fixierausnehmung 20 ist dazu vorgesehen eine unverlierbare Verbindung zwischen der Wischleisteneinheit 14 und dem Wischblattadapter 12 auszubilden. Die Fixierausnehmung 20 der Federschiene 18 umfasst zumindest eine, insbesondere zwei, Außenkontur/en 52, 52'. Die Außenkonturen 52,52' der Fixierausnehmung 20 bilden mit der Richtung einer Längskante 50 der Federschiene 18 in Haupterstreckungsrichtung der Federschiene 18 jeweils einen Winkel aus, welcher in der Fixierausnehmung 20 genau 90° aufweist. Die Sicherungsrippe 26 ist im montierten Zustand, insbesondere in der Fixierstellung, in der Fixierausnehmung 20 der Federschiene 18 angeordnet. Die Federschiene 18 weist eine neben der Fixierausnehmung 20 angeordnete Verbindungsausnehmung 28 auf. Die Verbindungsausnehmung 28 ist dazu vorgesehen in der Verbindungsstellung (siehe Figur 3) die Sicherungsrippe 26 des Wischblattadapters 12 aufzunehmen. Die Verbindungsausnehmung 28 weist auf einer der Fixierausnehmung 20 zugewandten Seite zumindest eine Auslenkfläche 46 auf. Die Auslenkfläche 46 ist dazu vorgesehen die Sicherungsrippe 26, bei einer Bewegung der Sicherungsrippe 26 aus der Verbindungsausnehmung 28 in der Verbindungsstellung in die Fixstellung, senkrecht zu einer Haupterstreckungsrichtung der Wischleisteneinheit 14 auszulenken (vgl. Fig. 2 und Fig. 4). Die Verbindungsausnehmung 28 der Federschiene 18 umfasst zumindest eine Außenkontur 54. Die Außenkontur 54 der Verbindungsausnehmung 28 bildet mit der Richtung einer Längskante 50 der Federschiene 18 in Haupterstreckungsrichtung der Federschiene 18 einen Winkel aus, welcher in der Fixierausnehmung 20 genau 90° aufweist. Die Kontur der Auslenkfläche 46 der Verbindungsausnehmung 28 bildet mit der Richtung einer Längskante 50 der Federschiene 18 in Haupterstreckungsrichtung der Federschiene 18 einen Winkel aus, welcher in der Verbindungsausnehmung 28 weniger als 90° aufweist. Die Verbindungsausnehmung 28, insbesondere der Mittelpunkt der Verbindungsausnehmung 28, und die Fixierausnehmung 20, insbesondere der Mittelpunkt der Fixierausnehmung 20, der Federschiene 18 sind in einem Abstand von 5-7 mm voneinander angeordnet.

Die Federschiene 18 weist zumindest zwei, insbesondere zumindest vier, Schienenausnehmungen 48, 48', 48", 48‴ auf. Die Schienenausnehmungen 48, 48', 48", 48‴ sind dazu vorgesehen die zumindest zwei, insbesondere zumindest vier, Haltelemente 24, 24', 24", 24‴ des Wischblattadapters 12 während einer Montage zumindest temporär aufzunehmen. Die Schienenausnehmungen 48, 48', 48", 48‴ sind jeweils in Paaren von zwei Schienenausnehmungen 48, 48', 48", 48‴ auf gegenüberliegenden Seiten entlang der Hauptersteckungsrichtung der Federschiene 18 an der Federschiene 18 angeordnet. Die Schienenausnehmungen 48, 48', 48", 48‴ sind entlang der Hauptersteckungsrichtung an die Größe der vier Haltelemente 24, 24', 24", 24‴ des Wischblattadapters 12 angepasst. Die Haltelemente 24, 24', 24", 24‴ weisen eine im Wesentlichen quaderförmige Außenkontur auf. Die zumindest eine Federschiene 18 ist dazu vorgesehen, zu einer unverlierbaren Verbindung des zumindest einen Wischblattadapters 12 und der zumindest einen Wischleisteneinheit 14 aus der Verbindungsstellung in die Fixstellung bewegt zu werden.

Die Wischleisteneinheit 14 weist vier Leistenausnehmungen 58, 58', 58", 58‴, auf. Die Leistenausnehmungen 58 sind dazu vorgesehen in einer Verbindungsstellung die zumindest vier Haltelemente 24, 24', 24", 24‴ des Wischblattadapters 12 wenigstens teilweise aufzunehmen. Die Leistenausnehmungen 58, 58', 58", 58‴ zur Aufnahme der Haltelemente 24, 24', 24", 24‴ des Wischblattadapters 12 sind identisch ausgebildet. Die von der Wischleisteneinheit 14 ausgebildete äußere Begrenzung der Leistenausnehmungen 58, 58', 58", 58‴ weist einen rechteckigen Querschnitt entlang einer Ebene auf, welche sich senkrecht zur Haupterstreckungsrichtung der Wischleisteneinheit 14 erstreckt. Die von der Wischleisteneinheit 14 ausgebildete äußere Begrenzung der Leistenausnehmungen 58, 58', 58", 58‴ weist einen rechteckigen Querschnitt entlang einer Ebene auf, welche sich senkrecht zu den Wischrichtungen 32, 32' erstreckt. Die von der Wischleisteneinheit 14 ausgebildete äußere Begrenzung der Leistenausnehmungen 58, 58', 58", 58‴ weist einen rechteckigen Querschnitt entlang einer Ebene auf, welche sich parallel zu den Wischrichtungen 32, 32' und parallel zur Haupterstreckungsrichtung der Wischleisteneinheit 14 erstreckt. Die von der Wischleisteneinheit 14 ausgebildete innere Begrenzung der Leistenausnehmungen 58, 58', 58", 58‴ bildet die äußere Begrenzung für eine Federschienenaufnahme 16 aus. Durch die Leistenausnehmungen 58, 58', 58", 58‴ weist die Federschienenaufnahme 16 Öffnungen auf, welche senkrecht zur Haupterstreckungsrichtung der Wischleisteneinheit 14 angeordnet sind. Die vier Leistenausnehmungen 58, 58', 58", 58‴ der Wischleisteneinheit 14 sind in der Verbindungsstellung dazu vorgesehen, jeweils in einer Flucht mit den zumindest zwei Schienenausnehmungen 48, 48', 48", 48‴ der Federschiene 18 angeordnet zu sein. Die Leistenausnehmungen 58, 58', 58", 58‴ und die Schienenausnehmungen 48, 48', 48", 48‴ weisen einen im Wesentlichen gleich großen, Querschnitt auf. Die Außenkonturen der Leistenausnehmungen 58, 58', 58", 58‴ und der Schienenausnehmungen 48, 48', 48", 48‴ weisen im Wesentlichen rechteckige Querschnitte auf.

Die Wischleisteneinheit 14 weist zumindest eine Verbindungsausnehmung 56 auf. Die Verbindungsausnehmung 56 der Wischleisteneinheit 14 ist dazu vorgesehen in zumindest einer Stellung die zumindest eine Sicherungsrippe 26 des Wischblattadapters 12 mindestens teilweise aufzunehmen.

Die Leistenausnehmungen 58, 58', 58", 58‴ zur Aufnahme der Haltelemente 24, 24', 24", 24‴ und die Verbindungsausnehmung 56 zur Aufnahme der Sicherungsrippe 26 des Wischblattadapters 12 sind im Wesentlichen identisch ausgebildet. Die Verbindungsausnehmung 56 weist eine kleine Querschnittsfläche auf als die eine einzelne Leistenausnehmung 58, 58', 58", 58‴.

Der Wischblattadapter 12 umfasst eine Sicherungsrippe 26. Die Sicherungsrippe 26 erstreckt sich zu einer unverlierbaren Verbindung zwischen der Wischleisteneinheit 14 und dem Wischblattadapter 12 in einem montierten Zustand zumindest teilweise durch die Fixierausnehmung 20 der zumindest einen Federschiene 18. Die zumindest eine Sicherungsrippe 26 weist zumindest einen Querschnitt auf, welcher zu einem Einrasten in der zumindest einen Fixierausnehmung 20 ausgebildet ist. Die zumindest eine Sicherungsrippe 26 weist eine polygonale Form, insbesondere eine quadratische Form, auf. Die Sicherungsrippe 26 wirkt im montierten Zustand entgegen einem Herausziehen der Federschiene 18 aus der Wischleisteneinheit 14. Die Sicherungsrippe 26 rastet vorzugsweise in einem montierten Zustand in der Fixierausnehmung 20 der Federschiene 18 ein.

Ein Verfahren zu einer Montage der Wischblattvorrichtung 10 umfasst in zumindest einem Verfahrensschritt des Verfahrens, insbesondere in einem Einschubschritt des Verfahrens, ein Einschieben der Federschiene 18 in die Federschienenaufnahme 16 der Wischleisteneinheit 14. Vorzugsweise wird in zumindest einem Verfahrensschritt des Verfahrens, insbesondere in dem Einschubschritt, die Federschiene 18 in die Federschienenaufnahme 16 von einem Endbereich 30, 30' der Wischleisteneinheit 14 geschoben. Vorzugsweise wird in zumindest einem Verfahrensschritt des Verfahrens, insbesondere in dem Einschubschritt, die Federschiene 18 vollständig in der Federschienenaufnahme 16 der Wischleisteneinheit 14 geschoben. Die Federschiene 18 wird insbesondere in die Verbindungsstellung geschoben, in der die Leistenausnehmungen 58, 58' der Wischleisteneinheit 14 jeweils in einer Flucht mit den Schienenausnehmungen 48, 48' der Federschiene 18 angeordnet sind.

Vorzugsweise wird in zumindest einem Verfahrensschritt des Montageverfahrens, insbesondere einem anschließenden Positionierschritt des Verfahrens, der Wischblattadapters 12 auf die zumindest eine Wischleisteneinheit 14 aufgesteckt. In zumindest einem Verfahrensschritt des Verfahrens, insbesondere in dem Positionierschritt, werden die vier Haltelemente 24, 24', 24", 24‴ des Wischblattadapters 12 in vier Leistenausnehmungen 58, 58', 58", 58‴ der Wischleisteneinheit 14 gesteckt. In zumindest einem Verfahrensschritt des Verfahrens, insbesondere in dem Positionierschritt, werden die vier Haltelemente 24, 24', 24", 24‴ des Wischblattadapters 12 durch die vier Leistenausnehmungen 58, 58', 58", 58‴ der Wischleisteneinheit 14 durch die Schienenausnehmungen 48, 48' der Federschiene 18 gesteckt. In zumindest einem Verfahrensschritt des Verfahrens, insbesondere in dem Positionierschritt, wird die Sicherungsrippe 26 des Wischblattadapters 12 in die Verbindungsausnehmung 56 der zumindest einen Wischleisteneinheit 14 gesteckt. In zumindest einem Verfahrensschritt des Verfahrens, insbesondere in dem Positionierschritt, wird die Sicherungsrippe 26 des Wischblattadapters 12 durch die Verbindungsausnehmung 56 der zumindest einen Wischleisteneinheit 14 in die Verbindungsausnehmung 28 der Federschiene 18 gesteckt. In zumindest einem Verfahrensschritt des Verfahrens, insbesondere in dem Positionierschritt, wird der Wischblattadapter 12 auf eine der Wischlippe 34 abgewandten Seite auf die Wischleisteneinheit 14 gesteckt.

In zumindest einem Verfahrensschritt des Verfahrens, insbesondere in einem anschließenden Fixierungsschritt, wird die Federschiene 18 relativ zu der Wischleisteneinheit aus der Verbindungsstellung in eine Fixierstellung verschoben. Vorzugsweise wird die Sicherungsrippe 26 bei einem Verschieben der Federschiene 18 von der Verbindungsausnehmung 28 der Federschiene 18 in die Fixierausnehmung 20 verschoben. Vorzugsweise biegt sich in zumindest einem Verfahrensschritt des Verfahrens, insbesondere in dem Fixierungsschritt, der Wischblattadapter 12 zu einem Einrasten der Sicherungsrippe 26 in einem Bereich um die Sicherungsrippe 26 in eine Wischrichtung 32, 32' durch einen Druck der Federschiene 18 auf die Sicherungsrippe 26. Vorzugsweise biegt sich in zumindest einem Verfahrensschritt des Verfahrens, insbesondere in dem Fixierungsschritt, der Wischblattadapter 12 bei einem Einrasten der Sicherungsrippe 26 in der Fixierausnehmung 20 in einem Bereich um die Sicherungsrippe 26, zurück in eine Wischrichtung 32, 32'.

Vorzugsweise sind die Wischleisteneinheit 14, die Federschiene 18 und der Wischblattadapter 12 infolge einer Anordnung des Wischblattadapters 12 an der Wischleisteneinheit 14 und an der Federschiene 18 sowie infolge eines Eingreifens der Sicherungsrippe 26 in die Fixierausnehmung 20 sicher miteinander verbunden.

## Patentansprüche

1. Wischblattvorrichtung mit zumindest einer Wischleisteneinheit (14), mit zumindest einer Federschiene (18), welche zumindest eine Fixierausnehmung (20) aufweist, und mit zumindest einem Wischblattadapter (12), der zumindest zwei Haltelemente (24, 24') aufweist, die in einem montierten Zustand die zumindest eine Federschiene (18) zumindest teilweise umgreifen, und der zu einer unverlierbaren Verbindung mit der zumindest einen Wischleisteneinheit (14) vorgesehen ist, wobei der zumindest eine Wischblattadapter (12) zumindest eine Sicherungsrippe (26) aufweist, welche sich zu einer unverlierbaren Verbindung zwischen der Wischleisteneinheit (14) und dem Wischblattadapter (12) in einem montierten Zustand zumindest teilweise durch die Fixierausnehmung (20) der zumindest einen Federschiene (18) erstreckt, **dadurch gekennzeichnet, dass** die Federschiene (18) eine, insbesondere neben der Fixierausnehmung (20) angeordnete, Verbindungsausnehmung (28) aufweist, welche dazu vorgesehen ist in einer Verbindungsstellung die zumindest eine Sicherungsrippe (26) des Wischblattadapters (12) aufzunehmen.

2. Wischblattvorrichtung nach Anspruch 1, **dadurch gekennzeichnet, dass** die Verbindungsausnehmung (28) auf einer der Fixierausnehmung (20) zugewandten Seite zumindest eine Auslenkfläche (46) aufweist, welche dazu vorgesehen ist die Sicherungsrippe (26), bei einer Bewegung der Sicherungsrippe (26) aus der Verbindungsausnehmung (28) in der Verbindungsstellung in die Fixstellung, senkrecht zu einer Haupterstreckungsrichtung der Wischleisteneinheit (14) auszulenken.

3. Wischblattvorrichtung nach einem der vorhergehenden Ansprüche,
**dadurch gekennzeichnet, dass** die Verbindungsausnehmung (28) und die Fixierausnehmung (20) der Federschiene (18) in einem Abstand von 5 - 7 mm voneinander angeordnet sind.

4. Wischblattvorrichtung nach einem der vorhergehenden Ansprüche,
**dadurch gekennzeichnet, dass** die zumindest eine Wischleisteneinheit (14) zumindest zwei Leistenausnehmungen (58, 58') aufweist, welche dazu vorgesehen sind in einer Verbindungsstellung die zumindest zwei Haltelemente (24, 24') des Wischblattadapters (12) wenigstens teilweise aufzunehmen.

5. Wischblattvorrichtung nach einem der vorhergehenden Ansprüche,
**dadurch gekennzeichnet, dass** die zumindest eine Wischleisteneinheit (14) zumindest eine Verbindungsausnehmung (56) aufweist, welche dazu vorgesehen ist in zumindest einer Stellung die zumindest eine Sicherungsrippe (26) des Wischblattadapters (12) mindestens teilweise aufzunehmen.

6. Wischblattvorrichtung nach einem der vorhergehenden Ansprüche,
**dadurch gekennzeichnet, dass** die Federschiene (18) zumindest zwei Schienenausnehmungen (48, 48') aufweist, welche dazu vorgesehen sind die zumindest zwei Haltelemente (24, 24') des Wischblattadapters (12) während einer Montage zumindest temporär aufzunehmen.

7. Wischblattvorrichtung nach Anspruch 4 und 6, **dadurch gekennzeichnet, dass** die zumindest zwei Leistenausnehmungen (58, 58') der Wischleisteneinheit (14) in der Verbindungsstellung dazu vorgesehen sind, jeweils in einer Flucht mit den zumindest zwei Schienenausnehmungen (48, 48') der Federschiene (18) angeordnet zu sein.

8. Wischblattvorrichtung nach einem der vorhergehenden Ansprüche,
**dadurch gekennzeichnet, dass** die zumindest eine Federschiene (18) dazu vorgesehen ist, zu einer unverlierbaren Verbindung des zumindest einen Wischblattadapters (12) und der zumindest einen Wischleisteneinheit (14) aus der Verbindungsstellung in die Fixstellung bewegt zu werden.

9. Wischblattvorrichtung nach Anspruch 4 und 6, **dadurch gekennzeichnet, dass** die Leistenausnehmungen (58, 58') und die Schienenausnehmungen (48, 48') einen im Wesentlichen gleich großen Querschnitt aufweisen.

## Claims

1. Wiper blade device having at least one wiper strip unit (14), having at least one spring rail (18) which has at least one fixing recess (20), and having at least one wiper blade adapter (12) which has at least two holding elements (24, 24'), which at least partially engage around the at least one spring rail (18) in an assembled state, and which is provided for forming a captive connection with the at least one wiper strip unit (14), wherein the at least one wiper blade adapter (12) has at least one securing rib (26) which at least partially extends through the fixing recess (20) of the at least one spring rail (18) to form a captive connection between the wiper strip unit (14) and the wiper blade adapter (12) in an assembled state, **characterized in that** the spring rail (18) has a connecting recess (28) which is arranged in particular next to the fixing recess (20) and is provided to receive the at least one securing rib (26) of the wiper blade adapter (12) in a connecting position.

2. Wiper blade device according to Claim 1, **characterized in that** the connecting recess (28) has, on a side facing the fixing recess (20), at least one deflecting surface (46) which is provided to deflect the securing rib (26) perpendicularly to a main direction of extent of the wiper strip unit (14) when the securing rib (26) is moved from the connecting recess (28) in the connecting position into the fixing position.

3. Wiper blade device according to either of the preceding claims, **characterized in that** the connecting recess (28) and the fixing recess (20) of the spring rail (18) are arranged at a distance of 5-7 mm from each other.

4. Wiper blade device according to one of the preceding claims, **characterized in that** the at least wiper strip unit (14) has at least two strip recesses (58, 58') which are provided to at least partially receive the at least two holding elements (24, 24') of the wiper blade adapter (12) in a connecting position.

5. Wiper blade device according to one of the preceding claims, **characterized in that** the at least one wiper strip unit (14) has at least one connecting recess (56) which is provided to at least partially receive the at least securing rib (26) of the wiper blade adapter (12) in at least one position.

6. Wiper blade device according to one of the preceding claims, **characterized in that** the spring rail (18) has at least two rail recesses (48, 48') which are provided to at least temporarily receive the at least two holding elements (24, 24') of the wiper blade adapter (12) during assembly.

7. Wiper blade device according to Claims 4 and 6, **characterized in that** the at least two strip recesses (58, 58') of the wiper strip unit (14) are provided in the connecting position so as to be arranged in each case in alignment with the at least two rail recesses (48, 48') of the spring rail (18).

8. Wiper blade device according to one of the preceding claims, **characterized in that** the at least one spring rail (18) is provided to be moved from the connecting position into the fixing position to form a captive connection of the at least one wiper blade adapter (12) and the at least one wiper strip unit (14).

9. Wiper blade device according to Claims 4 and 6, **characterized in that** the strip recesses (58, 58') and the rail recesses (48, 48') have a cross section which is substantially equal in size.

## Revendications

1. Dispositif formant balai d'essuie-glace comprenant au moins une unité (14) formant lame d'essuyage, au moins un rail élastique (18) qui présente au moins un évidement de fixation (20), et au moins un adaptateur (12) de balai d'essuie-glace qui présente au moins deux éléments de retenue (24, 24') qui, à l'état de montage, entourent au moins partiellement ledit au moins un rail élastique (18), et qui est prévu pour une liaison imperdable avec l'au moins une unité (14) formant lame d'essuyage, l'au moins un adaptateur (12) de balai d'essuie-glace présentant au moins une nervure d'arrimage (26), qui s'étend au moins partiellement à travers l'évidement de fixation (20) de l'au moins un rail élastique (18) pour former une liaison imperdable entre l'unité (14) formant lame d'essuyage et l'adaptateur (12) de balai d'essuie-glace dans un état de montage, **caractérisée en ce que** le rail élastique (18) présente un évidement de liaison (28) disposé en particulier à côté de l'évidement de fixation (20), lequel est prévu pour recevoir l'au moins une nervure d'arrimage (26) de l'adaptateur (12) de balai d'essuieglace dans une position de liaison.

2. Dispositif formant balai d'essuie-glace selon la revendication 1, **caractérisé en ce que** l'évidement de liaison (28) présente, sur un côté tourné vers l'évidement de fixation (20), au moins une surface de déviation (46) qui est prévue pour dévier la nervure d'arrimage (26) perpendiculairement à une direction d'extension principale de l'unité (14) formant lame d'essuyage lors d'un mouvement de la nervure d'arrimage (26) hors de l'évidement de liaison (28) dans la position de liaison vers la position de fixation.

3. Dispositif formant balai d'essuie-glace selon l'une des revendications précédentes, **caractérisé en ce que** l'évidement de liaison (28) et l'évidement de fixation (20) du rail élastique (18) sont disposés à une distance de 5 à 7 mm l'un de l'autre.

4. Dispositif formant balai d'essuie-glace selon l'une des revendications précédentes, **caractérisé en ce que** ladite au moins une unité (14) formant lame d'essuyage présente au moins deux évidements de lame (58, 58') qui sont prévus pour recevoir au moins partiellement les au moins deux éléments de retenue (24, 24') de l'adaptateur (12) de balai d'essuie-glace dans une position de liaison.

5. Dispositif formant balai d'essuie-glace selon l'une quelconque des revendications précédentes, **caractérisé en ce que** l'au moins un ensemble de lame d'essuyage (14) présente au moins un évidement de liaison (56) prévu pour recevoir au moins partiellement, dans au moins une position, l'au moins une nervure de blocage (26) de l'adaptateur (12) de balai d'essuie-glace.

6. Dispositif formant balai d'essuie-glace selon l'une quelconque des revendications précédentes, **caractérisé en ce que** la lame élastique (18) comporte au moins deux évidements de lame (48, 48') prévus pour recevoir au moins temporairement les au moins deux éléments de maintien (24, 24') de l'adaptateur (12) de balai d'essuie-glace lors du montage.

7. Dispositif formant balai d'essuie-glace selon les revendications 4 et 6, **caractérisé en ce que** les au moins deux évidements (58, 58') de l'unité (14) formant lame d'essuyage sont prévus, en position de liaison, pour être respectivement alignés avec les au moins deux évidements (48, 48') de la lame élastique (18).

8. Dispositif formant balai d'essuie-glace selon l'une quelconque des revendications précédentes, **caractérisé en ce que** l'au moins un rail élastique (18) est prévu pour déplacer, pour une connexion imperdable de l'au moins un adaptateur (12) de balai d'essuie-glace et de l'au moins une unité (14) formant lame d'essuyage, de la position de connexion à la position fixe.

9. Dispositif formant balai d'essuie-glace selon les revendications 4 et 6, **caractérisé en ce que** les évidements de la lame (58, 58') et les évidements du rail (48, 48') ont une section transversale sensiblement égale.
